# EUROPEAN PATENT SPECIFICATION

(11) **EP 2 112 093 B1**
(45) Date of publication and mention of the grant of the patent: **14.11.2012**
(21) Application number: 08103706.1
(22) Date of filing: 24.04.2008
(51) Int. Cl.: B65D 85/804, A47J 31/36, A47J 31/06

(54) **Capsule, device, and method for preparing infused beverages**
Kapsel, Vorrichtung und Verfahren zur Herstellung von Aufgussgetränken
Capsule, dispositif et procédé de préparation de boissons infusées

(43) Date of publication of application: 28.10.2009
(73) Proprietor: Cense d'Almez S.A., 1325 Corroy le Grand (BE)
(72) Inventor: Van Belleghem, Luc, 1325 Corroy-le-Grand (BE)
(74) Representative: Luys, Marie-José A.H.

(56) References cited:
- EP-A- 1 774 878
- EP-A- 1 894 853
- EP-A- 1 894 854

## Description

The present invention relates to a capsule, device, and method for preparing infused beverages.

In particular, the present invention relates to a capsule containing dry infusible matter for preparing infused beverages, and comprising a front face,; a back face comprising a liquid injection point and substantially opposed to said front face; and an envelope between said front face and said back face. (see EP 1894853, EP 1894854 or EP 1774878).

In the present specification, the term "capsule" is preferentially used, although it should be considered synonymous with the terms "cartridge", "package" or "container" used elsewhere in this particular technical domain. The term "liquid injection point" should be understood as a small area particularly suitable for the injection of a liquid into the capsule. It may be formed, for instance, by an open orifice between the inside and the outside of the capsule, or by a frangible area which can be pierced prior to the liquid injection.

The present invention also relates to a device for preparing infused beverages comprising a receptacle for receiving the abovementioned capsule, with the front face in a substantially vertical position; and injecting means for introducing an infusing liquid into said capsule through said liquid injection point when said capsule is in said receptacle.

In the present specification, the term "infusing liquid" generally refers to the liquid used to infuse ingredients contained in the dry infusible matter, so as to produce an infused beverage wherein said infusing liquid carries said ingredients in dissolved or suspended form.

Usually, but not necessarily, the infusing liquid will be hot water, and the infused beverage a tea, such as black tea, green tea, white tea, flavoured tea, or also a so-called herbal or fruit tea using infusible matter other than the leaves of the tea plant (for instance, rooibos, camomile, peppermint, etc.) .

Such capsules and devices are known from the state of the art.

Canadian patent application CA 2 448 474 A1 discloses one such capsule comprising all of the abovementioned features. However, this capsule presents several drawbacks. The capsule disclosed in this document is particularly adapted to use for preparing beverages by percolation, in which a hot liquid percolates down continuously through the matter contained in the capsule. For this, the capsule is placed in a horizontal position, with the back face comprising the liquid injection point at the top, and the front face at the bottom. This method, though appropriate for preparing such beverages as coffee, is entirely inappropriate for, for instance, tea, which requires a longer and gentler infusion. With the infusing liquid flowing too rapidly downwards under the influence of gravity, it provokes a chaotic and exceedingly fast breakdown of various tea molecules, ruining the quality and flavour of the infusion.

In order to solve this problem, it has been proposed to place such capsules with the front face in a vertical position. However, this has the drawback of preventing, or at least hindering, the flow of the densest portion of the infused beverage out of the capsule. A capsule and a device, both comprising all of the abovementioned features, were disclosed in International Patent Application WO 2007/042414, which attempted to solve this problem with a capsule further comprising, on the front face and outwardly of the filter wall, an overflow wall so as to create a siphoning effect to siphon that densest portion or "liquor" of the infused beverage out of the capsule.

However, these capsule and device still present significant drawbacks. The overflow wall has at best a limited effect in helping to extract said liquor out of the capsule. Moreover, since, after the liquid flow stops, the capsule will retain liquid up to the height of the overflow wall, its disposal will be complicated. Furthermore, since the infusion takes place solely within the capsule, and the volume of a beverage serving is many times larger than that of the corresponding dry infusible matter, the capsule will have to be disproportionately large to allow a significant residence time within the capsule without lengthening excessively the time required to prepare a full serving of the infused beverage. Also, the overflow wall complicates the production of the capsule. The symmetrical outer shape of this capsule has the consequence that it may be inserted in the device in either of two opposed positions. This further complicates the production of the capsule, since several elements within the capsule need to be doubled for it to work properly in either position.

These drawbacks are solved by the capsule and device according to the invention.

In the capsule according to the invention the front face comprises a filter wall for fluid communication with an infusion chamber when inserted into a device for preparing infused beverage and a lower side of the envelope presents an angle α with respect to said front face that is lower than 70°, whereas an upper side of said envelope, substantially opposed to said lower side, presents an angle β with respect to said front face that is from 85° to lower than 90°. The slope of the lower side facilitates the evacuation of the high density liquor out of the capsule. With the flatter upper side, the bulk of the capsule remains within reasonable limits. Moreover, the asymmetric shape of the capsule has additional advantages. For instance, because of this asymmetric shape, the capsule may only be used in a single well-defined position, preventing user confusion without duplication of elements within the capsule.

Advantageously, said front face may also comprise, substantially opposed to said liquid injection point, a solid deflector wall. In use, such a solid deflector wall will deflect a jet of infusing liquid injected into the capsule through said liquid injection point. The major part of the liquid will thus not directly escape the capsule, but indirectly flow onto the infusible matter at the bottom of the capsule, gently infusing it while still at a predetermined infusion temperature.

Advantageously, said dry infusible matter will occupy, within the capsule, a volume smaller than that which is delimited by the front face, said lower side of the envelope and a horizontal plane below said liquid injection point. The objective thereof is that the jet of infusing liquid injected into the capsule does not directly impinge onto the dry infusible matter at high speed, but only indirectly flows onto it, so as to achieve a gentler infusion avoiding percolation and pressure brewing which would seriously imparage the quality and flavour of the infusion.

Because of the asymmetric shape of the capsule, the liquid injection point may be arranged above a center of the capsule, so that the volume delimited by the front face, said lower side of the envelope and said horizontal plane can comprise most of the volume of the capsule, increasing the quantity of infusible matter that can be contained therein without requiring a capsule with a large outer volume.

Advantageously, the capsule may be substantially made of a plastic material, which reduces the production costs, while providing a hygienic and taste-neutral container. By "plastic material" should be understood a polymer-based material, such as a thermoplastic polymeric material. Alternatively, any other material suitable for contact with hot drinks for human consumption could also be used.

Particularly advantageously, the capsule may be produced by injection moulding. With this production method, the plastic is injected in liquid form into a mould through a plastic injection point. For production purposes, this plastic injection point should be centrally located, so that the liquid plastic flow front reaches the opposite edges of the mould approximately at the same time. The asymmetric shape of the capsule then has the additional advantage that a single liquid injection point can be located away from this plastic injection point. Because the liquid injection point will usually be an orifice or a thinner, frangible area in the back face of the capsule, it normally can not coincide with the plastic injection point. In a symmetric capsule, however, several alternative liquid injection points should be arranged so that the capsule could be used in any one of its alternative positions. Particularly advantageously, the capsule may comprise a plastic injection point placed below said liquid injection point.

Advantageously, said envelope may present a substantially ovoid cross-section, with a prolate, that is, extended lower side, and, eventually also an oblate, that is, flattened upper side. This shape increases the trough effect of the lower side, and improves the flow of the high density liquor out of the capsule. However, alternative cross-sections may be considered, such as, for example, circular, oval, part-circular or part-oval, triangular, rhomboidal, square, or trapezoidal.

The device for preparing infused beverages according to the invention also comprises an infusion chamber with a substantially vertical side opening to said receptacle, so as to be in fluid connection with said filter wall of the capsule when said capsule is in said receptacle, and an openable and closable bottom opening to allow an infused beverage to flow out of the chamber. The infusion chamber provides an enlarged volume with respect to the capsule for carrying out the infusion process, so that a whole serving can be prepared in one go without requiring serving-sized capsules. The substantially vertical opening between the infusion chamber and the capsule allows significant fluid exchange through natural convection during the infusion process, homogenising the infused beverage.

Advantageously, said infusion chamber may present, below said side opening, a slope with an angle substantially equal to α with respect to the vertical. The infusion chamber can thus be formed as a natural prolongation of the capsule, further facilitating the evacuation of the infused beverage, and in particular of its densest and most aromatic liquor portion out of the capsule.

Advantageously, the device may also comprise cleaning means for introducing a rinsing fluid into said infusion chamber. The infusion chamber can thus be cleaned, for instance after preparing each serving, thus preventing contamination of the following servings and ensuring their taste.

The present invention also relates to the combination of a capsule and a device according to the invention.

The present invention also relates to a method for preparing infused beverages, comprising the steps of introducing a capsule according to the invention into the receptacle of a device according to the invention; injecting an infusing liquid into said capsule and the infusion chamber through the liquid injection point of the capsule; infusing the infusing liquid with said infusible matter so as to produce an infused beverage; and discharging said infused beverage through said bottom opening after said infusion step.

Advantageously, the method according to the invention may further comprise a separate second step of injecting infusing liquid into said capsule during said infusion step in order to agitate the infusible matter so as to obtain a more homogeneous infusion. This will facilitate the diffusion of a higher density of infusion molecules from around the infusible matter into the rest of the infusing liquid, and also reactivate the dffusion of infusion molecules from the infusible matter into the infusing liquid.

Advantageously, the method according to the invention may further comprise a cleaning step wherein a rinsing fluid is introduced and discharged from said infusion chamber.

Advantageously, the method according to the invention may further comprise a step of removing said capsule from said receptacle after said infused beverage is discharged from said infusion chamber.

In particular, said cleaning step may follow said capsule removing step, and the device according to the invention may comprise control means, such as, for example, an electronic circuit, for activating the capsule removing and cleaning steps in that order, and/or closing means, such as a lid, to close the abovementioned side opening during said cleaning step.

Several preferred embodiments of the invention will be described illustratively, but not restrictively with reference to the accompanying figures, in which:
Fig. 1 shows a schematic longitudinal section of a capsule within a device according to an embodiment of the invention;
Fig. 1a shows a schematic longitudinal section of the capsule of Fig. 1;
Fig. 2a shows a cross-section of the capsule of Fig. 1 a in the II-II plane;
Figs. 2b-h show cross-sections of alternative embodiments of the capsule according to the invention.

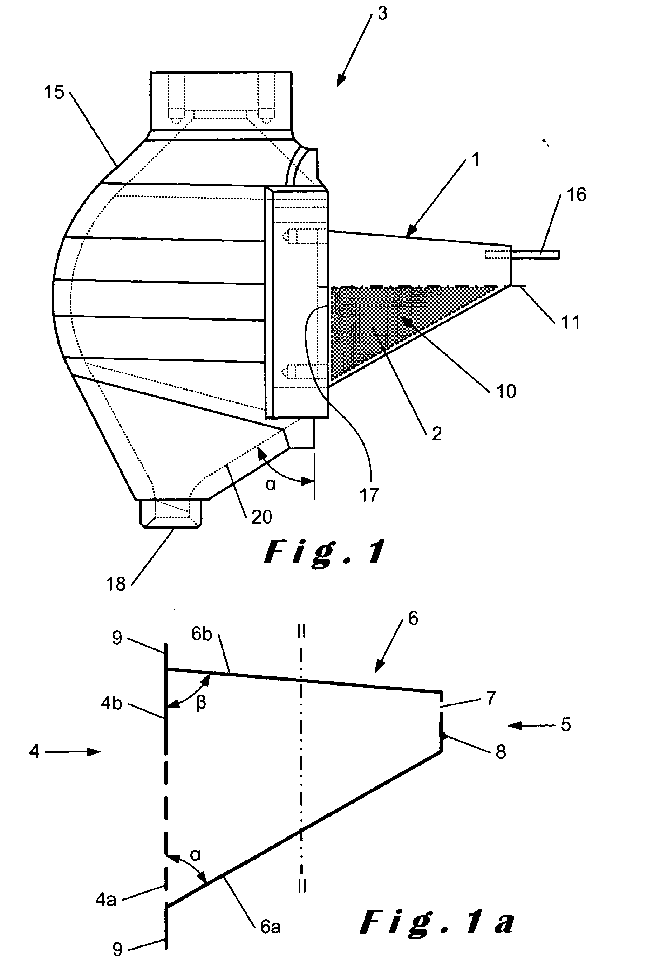

A capsule 1 containing dry infusible matter 2, such as tea leaves, and a device 3 for preparing infused beverages according to a particular embodiment of the invention are schematically illustrated in Fig.
1. The illustrated capsule 1, illustrated in more detail in Fig. 1a, comprises a front face 4, a back face 5, and an envelope 6 between said front face 4 and back face 5. The front face 4 is closed by a separate filter wall 4a and solid deflector wall 4b bonded onto the capsule 1. The filter wall 4a may be, for instance, formed by a filter mesh, or by a perforated wall. The back face 5 comprises a liquid injection point 7, which in this particular embodiment takes the form of an orifice between the inside and the outside of the capsule 1, but that could alternatively take the form, for instance, of a thinner, frangible area of the back face 5. The capsule 1 in this particular embodiment is partially produced from a thermoplastic polymer material by injection moulding, so that it also presents a plastic injection point 8 on said back face 5. This plastic injection point 8 is substantially lower than the liquid injection point 7, so that the latter does not significantly interfere in the plastic injection process. To preserve the flavour of the dry infusible matter 2 within the capsule, the front face 4 and the liquid injection point 7 may be sealed with removable foils, and the interior of the capsule 1 may contain an inert atmosphere.

Between the front face 4 and the back face 5, the capsule 1 is closed by an asymmetric envelope 6, which on its lower side 6a presents a substantially smaller angle α with respect to the front face 4, than on its substantially opposed upper side 6b. Because the capsule 1 of the illustrated embodiment is partially produced by injection moulding, both the angle α of the lower side 6a, and the angle β of the upper side 6b with respect to the front face 4 are smaller than 90°, so as to facilitate the extraction from the mould of the single injection moulded part formed by the envelope 6, the back face 5 and the lips 9. However, while the angle β of the upper side 6b is of about 85°, that of the lower side 6a is of just about 60°.

When the capsule 1 is in the illustrated position, the infusible dry matter 2 within collects in the troughlike space 10 delimited by the lower side 6a, the front face 4 and a horizontal plane 11 below the liquid injection point 7.

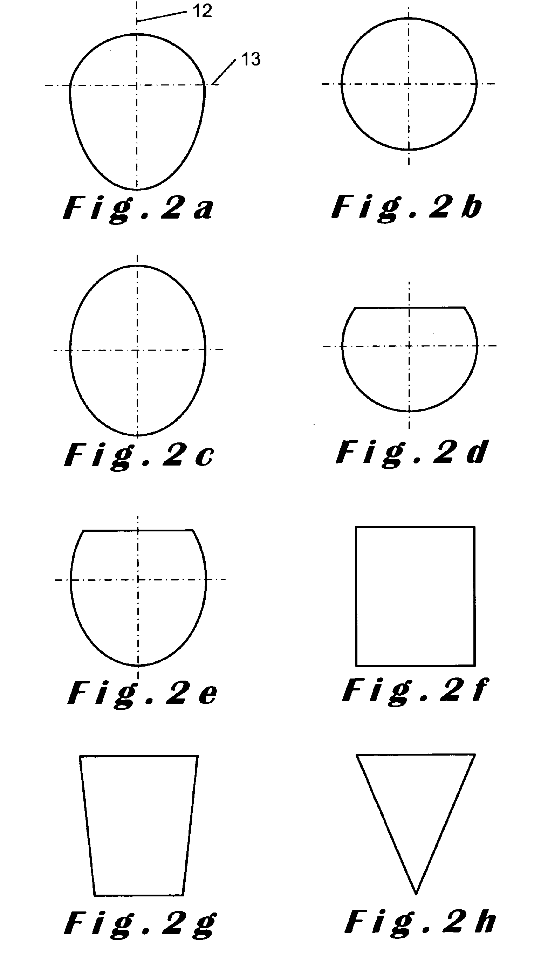

Fig. 2a illustrates the cross-section of the envelope 6. This ovoid cross-section has two main axes, a vertical axis 12 and a horizontal axis 13. While the vertical axis 12 is an axis of symmetry, the cross-section is elongated below the horizontal axis 13. Besides being aesthetically pleasing, this shape has the technical advantage of maximising the volume of the space 10 below the horizontal plane 11, while reinforcing its troughlike shape, and being relatively easy to produce by, for instance, injection moulding. However, alternative cross-sections could be considered, as illustrated, for instance, in Figs. 2b to 2h. Fig. 2b illustrates an alternative embodiment of the capsule 1 with a circular cross-section of the envelope 6, Fig. 2c illustrates another alternative embodiment with an elliptical cross-section. Figs. 2d and 2e illustrate, respectively, part-circular and part-elliptical alternative cross sections, wherein the upper part has been flattened. Fig. 2f illustrates an alternative square cross-section, Fig. 2g an alternative trapezoidal cross-section, wider on its upper side than on its lower side, and Fig. 2h another alternative cross-section in the shape of a downwardly pointing triangle.

The device 3 comprises a receptacle (not shown) for receiving said capsule 1, an infusion chamber 15, and injecting means 16 is the form of a hot water nozzle protruding into the orifice forming the liquid injection point 7 of the capsule. The receptacle may be formed in a sliding or rotating drawer so as to facilitate the introduction and extraction of the capsule 1. The infusion chamber 15 comprises a substantially vertical side opening 17 to said receptacle, so that it is in fluid connection with said filter wall 4a of the capsule 1. This substantially vertical side opening 17 may be surrounded by a sealing joint to ensure the leaktightness of this fluid connection. The infusion chamber 15 further comprises an openable and closable bottom opening 18 to allow an infused beverage to flow out of the chamber 15. It may also be provided with an upper vent 19 to ensure a smooth discharge of said infused beverage. Below the side opening 17, the infusion chamber 15 presents a slope 20 with the same angle α of 60° with respect to the vertical, so as to form a prolongation to the lower side of the capsule 1 in the receptacle.

The device 2 also comprises cleaning means 21, in this particular embodiment in the form of a rinsing nozzle near the top of the infusion chamber 15, for introducing a rinsing fluid into said infusion chamber 15. This rinsing fluid may be, for instance, water or steam.

In operation, the capsule 1 is first introduced in the receptacle. If said receptacle is mounted, for instance, on a sliding drawer, this may be done by sliding out the drawer, inserting the capsule 1, and sliding the drawer back in. The device 3 could be provided with cutting blades to simultaneously remove or slice open the abovementioned sealing foils of the capsule 1 during this operation.

Once the capsule is in the position illustrated in Fig. 1, a jet of hot water at a predetermined temperature is injected into the capsule 1 through the injecting means 16. This jet hits the solid deflector wall 4b of the capsule 1 and indirectly flows onto the dry infusible matter 2, and, through the filter wall 4a and the side opening 17 of the infusion chamber 15, into said infusion chamber 15, until it is filled up to the level of the capsule 1. The hot water is held in the infusion chamber 15 and the capsule 1 for a predetermined infusion time. During this infusion time, one or several spurts of hot water at the same or different temperatures may be injected into the capsule 1 through the injecting means 16 to agitate the infusible matter within the capsule 1, and promote the circulation of water between the capsule 1 and the infusion chamber 15 and so homogenise the infusion.

When the openable and closable bottom opening 18 is opened, the infused beverage will flow out of the infusion chamber 15. Because of the shape of the capsule 1 and the infusion chamber 15, even the densest liquor that collects at the bottom of the capsule 1 will flow out satisfactorily. The capsule 1 can then be extracted, possibly by sliding the abovementioned drawer. By this movement, the drawer may seal the side opening 17 and activate the cleaning means 21, which will inject the rinsing fluid to clean the infusion chamber 15. The rinsing fluid is then evacuated, either through the openable and closable bottom opening 18, or through an alternative opening, to complete the cleaning step.

Although the present invention has been described with reference to specific exemplary embodiments, it will be evident that various modifications and changes may be made to these embodiments without departing from the broader scope of the invention as set forth in the claims. For instance, the capsule 1 may comprise, on its outside, an identifier, such as a colour, bar code or other marking, of the dry infusible matter 2 within, and the device 3 may additionally comprise a sensor for reading such markings, connected to means, such as, for instance, an electronic processor, for controlling the temperature and/or timing of each spurt of hot water injected into the capsule, as well as the infusion time. Accordingly, the description and drawings are to be regarded in an illustrative sense rather than a restrictive sense.

## Claims

1. Capsule (1) containing dry infusible matter (2) for preparing infused beverages, and comprising:
- a front face (4),
- a back face (5) comprising a liquid injection point (7) and substantially opposed to said front face (4); and
- an envelope (6) between said front face (4) and said back face (5); and **characterised in that** said front face (4) comprises a filter wall (4a), for fluid communication with an infusion chamber when inserted into a device for preparing infused beverages and **in that** a lower side (6a) of said envelope (6) presents an angle α with respect to said front face (4) that is lower than 70°, whereas an upper side (6b) of said envelope (6), substantially opposed to said lower side (6a), presents an angle β with respect to said front face (4) that is from 85° to lower than 90°.

2. Capsule (1) according to claim 1, wherein said front face (4) also comprises, substantially opposed to said liquid injection point (7), a solid deflector wall (4b).

3. Capsule (1) according to any one of the previous claims, wherein said dry infusible matter (2) occupies, within the capsule (1), a volume smaller than that which is delimited by the front face (4), said lower side (6a) of the envelope (6) and a horizontal plane (11) below said liquid injection point (7).

4. Capsule (1) according to any one of the previous claims, substantially made of a plastic material.

5. Capsule (1) according to claim 4, produced by injection moulding.

6. Capsule (1) according to claim 5, comprising a plastic injection point (8) placed below said liquid injection point (7).

7. Capsule (1) according to any one of the previous claims, wherein said envelope (6) presents a substantially ovoid cross-section.

8. A device (3) for preparing infused beverages comprising:
- a receptacle for receiving a capsule (1) according to any one of the previous claims, with the front face (4) in a substantially vertical position; and
- injecting means (16) for introducing an infusing liquid into said capsule (1) through said liquid injection point (7) when said capsule (1) is in said receptacle; and
**characterised in that** it also comprises an infusion chamber (15) with a substantially vertical side opening (17) to said receptacle, so as to be in fluid connection with said filter wall (4a) of the capsule (1) when said capsule (1) is in said receptacle, and an openable and closable bottom opening (18) to allow an infused beverage to flow out of the infusion chamber (15).

9. A device (3) according to claim 8, wherein said infusion chamber (15) presents, below said side opening (17), a slope (20) with an angle substantially equal to α with respect to the vertical.

10. A device (3) according to any one of claims 8 or 9, further comprising cleaning means for introducing a rinsing fluid into said infusion chamber (15).

11. A device (3) according to any one of claims 8 to 10, with a capsule (1) according to any one of claims 1 to 7 within said receptacle.

12. A method for preparing infused beverages, comprising the steps of:
- introducing a capsule (1) according to any one of claims 1 to 7 into the receptacle of a device (3) according to any one of claims 8 to 10;
- injecting an infusing liquid into said capsule (1) and the infusion chamber (15) through the liquid injection point (7) of the capsule (1);
- infusing the infusing liquid with said infusible matter (2) so as to produce an infused beverage; and
- discharging said infused beverage through said bottom opening (18) after said infusion step.

13. A method according to claim 12, further comprising a separate second step of injecting infusing liquid into said capsule (1) during said infusion step in order to agitate the infusible matter (2) so as to obtain a more homogeneous infusion.

14. A method according to any one of claims 12 or 13, further comprising a cleaning step wherein a rinsing fluid is introduced and discharged from said infusion chamber (15).

15. A method according to any one of claims 12 to 14, further comprising a step of removing said capsule (1) from said receptacle after said infused beverage is discharged from said infusion chamber (15).

## Patentansprüche

1. Kapsel (1), die trockenen aufgussfähigen Stoff (2) zur Herstellung von Aufgussgetränken enthält und Folgendes umfasst:
- eine Vorderfläche (4),
- eine Rückfläche (5), die einen Flüssigkeitseinspritzpunkt (7) umfasst und der Vorderfläche (4) im Wesentlichen gegenüberliegt; und
- einen Mantel (6) zwischen der Vorderfläche (4) und der
Rückfläche (5);
und **dadurch gekennzeichnet ist, dass** die Vorderfläche (4) eine Filterwand (4a) zur Fluidverbindung mit einer Aufgusskammer bei Einführung in eine Vorrichtung zur Herstellung von Aufgussgetränken umfasst, und dass eine untere Seite (6a) des Mantels (6) einen Winkel α bezüglich der Vorderfläche (4) aufweist, der unter 70° liegt, während eine obere Seite (6b) des Mantels (6), die der unteren Seite (6a) im Wesentlichen gegenüberliegt, einen Winkel β bezüglich der Vorderfläche (4) aufweist, der von 85° bis unter 90° reicht.

2. Kapsel (1) nach Anspruch 1, wobei die Vorderfläche (4) dem Flüssigkeitseinspritzpunkt (7) im Wesentlichen gegenüberliegend außerdem eine feste Prallwand (4b) umfasst.

3. Kapsel (1) nach einem der vorhergehenden Ansprüche, wobei der trockene aufgussfähige Stoff (2) innerhalb der Kapsel (1) ein Volumen belegt, das kleiner als jenes ist, welches durch die Vorderfläche (4) abgegrenzt ist, wobei die untere Seite (6a) des Mantels (6) und eine horizontale Ebene (11) unter dem Flüssigkeitseinspritzpunkt (7) liegen.

4. Kapsel (1) nach einem der vorhergehenden Ansprüche, die im Wesentlichen aus Kunststoffmaterial hergestellt ist.

5. Kapsel (1) nach Anspruch 4, die im Wesentlichen durch Spritzgießen erzeugt ist.

6. Kapsel (1) nach Anspruch 5, umfassend einen Kunststoffeinspritzpunkt (8), der unter dem Flüssigkeitseinspritzpunkt (7) angeordnet ist.

7. Kapsel (1) nach einem der vorhergehenden Ansprüche, wobei der Mantel (6) im Wesentlichen einen eiförmigen Querschnitt aufweist.

8. Vorrichtung (3) zur Herstellung von Aufgussgetränken, umfassend:
- ein Behältnis zum Aufnehmen einer Kapsel (1) nach einem der vorhergehenden Ansprüche mit der Vorderfläche (4) in einer im Wesentlichen vertikalen Position; und
- Einspritzmittel (16) zum Einleiten einer Aufgussflüssigkeit in die Kapsel (1) durch den Flüssigkeitseinspritzpunkt (7), wenn sich die Kapsel (1) in dem Behältnis befindet; und
**dadurch gekennzeichnet, dass** sie außerdem eine Aufgusskammer (15) mit einer im Wesentlichen vertikalen Seitenöffnung (17) zu dem Behältnis, um in Fluidverbindung mit der Filterwand (4a) der Kapsel (1) zu stehen, wenn sich die Kapsel (1) in dem Behältnis befindet, und eine öffenbare und verschließbare Öffnung (18) zum Ermöglichen, dass ein Aufgussgetränk aus der Aufgusskammer (15) fließt, umfasst.

9. Vorrichtung (3) nach Anspruch 8, wobei die Aufgusskammer (15) unter der Öffnung (17) eine Neigung (20) mit einem Winkel, der im Wesentlichen gleich dem Winkel α bezüglich der Senkrechten ist, aufweist.

10. Vorrichtung (3) nach einem der Ansprüche 8 oder 9, ferner umfassend Reinigungsmittel zum Einführen eines Spülfluids in die Aufgusskammer (15).

11. Vorrichtung (3) nach einem der Ansprüche 8 bis 10, mit einer Kapsel (1) nach einem der Ansprüche 1 bis 7 innerhalb des Behältnisses.

12. Verfahren zum Herstellen von Aufgussgetränken, folgende Schritte umfassend:
- Einführen einer Kapsel (1) nach einem der Ansprüche 1 bis 7 in das Behältnis einer Vorrichtung (3) nach einem der Ansprüche 8 bis 10;
- Einspritzen einer Aufgussflüssigkeit in die Kapsel (1) und die Aufgusskammer (15) durch den Flüssigkeitseinspritzpunkt (7) der Kapsel (1);
- Herstellen eines Aufgusses der Aufgussflüssigkeit mit dem aufgussfähigen Stoff (2) zum Erzeugen eines Aufgussgetränks; und
- Ablassen des Aufgussgetränks durch die Bodenöffnung (18) nach dem Schritt des Herstellens eines Aufgusses.

13. Verfahren nach Anspruch 12, ferner umfassend den separaten Schritt des Einspritzens von Aufgussflüssigkeit in die Kapsel (1) während des Aufgussschritts zum Bewegen des aufgussfähigen Stoffs (2) zum Erzielen eines homogeneren Aufgusses.

14. Verfahren nach einem der Ansprüche 12 oder 13, ferner umfassend einen Reinigungsschritt, in dem ein Spülfluid in die Aufgusskammer (15) eingeleitet und daraus abgelassen wird.

15. Verfahren nach einem der Ansprüche 12 bis 14, ferner umfassend einen Schritt des Entfernens der Kapsel (1) aus dem Behältnis, nachdem das Aufgussgetränk aus der Aufgusskammer (15) abgelassen wurde.

## Revendications

1. Capsule (1) contenant de la matière infusable sèche (2) pour préparer des boissons infusées, et comprenant :
- une face avant (4),
- une face arrière (5) comprenant un point d'injection de liquide (7) et pratiquement opposée à ladite face avant (4) ; et
- une enveloppe (6) entre ladite face avant (4) et ladite face arrière (5) ;
et **caractérisée en ce que** ladite face avant (4) comprend une paroi filtrante (4a) pour communication fluidique avec une chambre d'infusion quand elle est insérée dans un dispositif pour préparer des boissons infusées et **en ce qu'**un côté inférieur (6a) de ladite enveloppe (6) présente un angle α par rapport à ladite face avant (4) qui est inférieur à 70°, tandis qu'un côté supérieur (6b) de ladite enveloppe (6), pratiquement opposé audit côté inférieur (6a), présente un angle ß par rapport à ladite face avant (4) qui est de 85° à moins de 90°.

2. Capsule (1) selon la revendication 1, dans laquelle ladite face avant (4) comprend, pratiquement opposée audit point d'injection de liquide (7), une paroi déflectrice solide (4b).

3. Capsule (1) selon l'une quelconque des revendications précédentes, dans laquelle ladite matière infusable sèche (2) occupe, à l'intérieur de la capsule (1), un volume inférieur à celui qui est délimité par la face avant (4), ledit côté inférieur (6a) de l'enveloppe (6) et un plan horizontal (11) en dessous dudit point d'injection de liquide (7).

4. Capsule (1) selon l'une quelconque des revendications précédentes, pratiquement réalisée en une matière plastique.

5. Capsule (1) selon la revendication 4, produite par moulage par injection.

6. Capsule (1) selon la revendication 5, comprenant un point d'injection de plastique (8) placé en dessous dudit point d'injection de liquide (7).

7. Capsule (1) selon l'une quelconque des revendications précédentes, dans laquelle ladite enveloppe (6) présente une section transversale pratiquement ovoïde.

8. Dispositif (3) pour préparer des boissons infusées comprenant :
- un réceptacle pour recevoir une capsule (1) selon l'une quelconque des revendications précédentes, avec la face avant (4) dans une position sensiblement verticale ; et
- des moyens d'injection (16) pour introduire un liquide d'infusion dans ladite capsule (1) par ledit point d'injection de liquide (7) quand ladite capsule (1) est dans ledit réceptacle ; et
**caractérisé en ce qu'**il comprend également une chambre d'infusion (15) avec une ouverture latérale pratiquement verticale (17) vers ledit réceptacle, de manière à être en communication fluidique avec ladite paroi filtrante (4a) de la capsule (1) quand ladite capsule (1) est dans ledit réceptacle, et une ouverture de fond (18) pouvant être ouverte et fermée pour permettre à une boisson infusée de s'écouler de la chambre d'infusion (15).

9. Dispositif (3) selon la revendication 8, dans lequel ladite chambre d'infusion (15) présente, en dessous de ladite ouverture latérale (17), une pente (20) avec un angle sensiblement égal à α par rapport à la verticale.

10. Dispositif (3) selon l'une quelconque des revendications 8 ou 9, comprenant en outre des moyens de nettoyage pour introduire un fluide de rinçage dans ladite chambre d'infusion (15).

11. Dispositif (3) selon l'une quelconque des revendications 8 à 10, avec une capsule (1) selon l'une quelconque des revendications 1 à 7 à l'intérieur du réceptacle.

12. Procédé pour préparer des boissons infusées, comprenant les étapes consistant à :
- introduire une capsule (1) selon l'une quelconque des revendications 1 à 7 dans le réceptacle d'un dispositif (3) selon l'une quelconque des revendications 8 à 10 ;
- injecter un liquide d'infusion dans ladite capsule (1) et la chambre d'infusion (15) par le point d'injection de liquide (7) de la capsule (1) ;
- infuser le liquide d'infusion avec ladite matière infusable sèche (2) de manière à produire une boisson infusée ; et
- décharger ladite boisson infusée par ladite ouverture de fond (18) après ladite étape d'infusion.

13. Procédé selon la revendication 12, comprenant en outre une deuxième étape séparée d'injection de liquide d'infusion dans ladite capsule (1) pendant ladite étape d'infusion afin d'agiter la matière infusable (2) de manière à obtenir une infusion plus homogène.

14. Procédé selon l'une quelconque des revendications 12 ou 13, comprenant en outre une étape de nettoyage dans laquelle un fluide de rinçage est introduit et déchargé de ladite chambre d'infusion (15).

15. Procédé selon l'une quelconque des revendications 12 à 14, comprenant en outre une étape d'enlèvement de ladite capsule (1) dudit réceptacle après que ladite boisson infusée a été déchargée de ladite chambre d'infusion (15).
